# EUROPEAN PATENT SPECIFICATION

(11) **EP 4 254 125 B1**
(45) Date of publication and mention of the grant of the patent: **28.01.2026**
(21) Application number: 20963774.3
(22) Date of filing: 30.12.2020
(51) Int. Cl.: G05D 1/00, A63B 55/60, B60W 30/16, B60W 50/14, G05D 1/243, G05D 1/247, G05D 1/686, G05D 101/10, G05D 105/20, G05D 107/20, G05D 109/10, G05D 111/30, G05D 111/50, G06V 40/20, G05D 111/10

(54) **ROUTINE-BASED CART SYSTEM OPERATING BY RECOGNIZING SPECIFIC BEHAVIOR OF USER, AND CART CONTROL METHOD USING SYSTEM**
DURCH ERKENNUNG DES SPEZIFISCHEN VERHALTENS EINES BENUTZERS BETRIEBENES, ROUTINEBASIERTES WAGENSYSTEM UND WAGENSTEUERUNGSVERFAHREN MIT DEM SYSTEM
SYSTÈME DE VOITURETTE BASÉ SUR UNE ROUTINE FONCTIONNANT PAR RECONNAISSANCE D'UN COMPORTEMENT SPÉCIFIQUE D'UN UTILISATEUR ET PROCÉDÉ DE COMMANDE DE VOITURETTE UTILISANT LE SYSTÈME

(30) Priority: 27.11.2020 KR 20200163117
(43) Date of publication of application: 04.10.2023
(73) Proprietor: TT&G., LTD., Buk-gu, Daegu 41496 (KR)
(72) Inventor: LEE, Bae Hee, Daegu 42004 (KR)
(74) Representative: Vossius & Partner Patentanwälte Rechtsanwälte mbB
(86) International application number: PCT/KR2020/019411
(87) International publication number: WO 2022/114380

(56) References cited:
- KR-A- 20160 097 894
- KR-A- 20170 089 074
- KR-A- 20200 054 909
- KR-B1- 101 451 592
- KR-B1- 101 451 592
- KR-B1- 101 783 890
- US-A1- 2020 108 303
- US-A1- 2020 349 789

## Description

### Technical Field

The present invention relates to a routine-based cart system operating by recognizing specific behaviors of a user and a cart control method using the cart system, more specifically, to a routine-based cart system operating by recognizing specific behaviors of a user and a cart control method using the cart system that are capable of recognizing and analyzing the specific behaviors of the user carrying a remote controller, if the specific behaviors corresponding to the specific behaviors of the user stored in a cart are done, to automatically stop the cart, without any use of the remote controller by the user.

### Background Art

Generally, a transportation vehicle for transporting a golf bag and other golf equipment around the golf course is called a golf cart, and the golf cart is classified into a manual golf cart directly pushed and driven by an operator and an unmanned golf cart performing autonomous driving, while tracking a person.

In conventional technologies, further, the golf cart recognizes a remote controller carried with a user through a tag and operates behind the user, while having a given distance within a trackable range from the user. If the golf cart recognizes the user within a safety zone (e.g., 1.5 m), it stops, and so as to perform the tracking driving, a given button of the cart is pressed by the user to directly instruct re-pairing, thereby causing many inconveniences in use. In the case of a round of golf for four players, the players who are not used to controlling the cart should have access to the cart again, so that the golf game cannot be performed smoothly due to the increase of foot traffic unnecessary.

Further, a golf cart system capable of performing autonomous driving, based on accurate position information, which is disclosed in Korea Patent No. 10-2038317 as filed by the same applicant as the invention, includes: a cart body automatically driven by a control module 200; the control module having a collision prevention sensor for recognizing an object to prevent the collision against the object, a GPS sensor for providing the position information of the cart body, a slope sensor for recognizing and controlling a slope, a memory for storing field information of a running area and a running limiting area of a golf course, a tracker for tracking a terminal in real time, a controller for receiving the position information of the terminal, calculating the distance from the terminal on the basis of the field information of the golf course stored in the memory, and controlling the movement of the cart body, a communication module for performing the transmission and reception to and from the terminal, and a distance measurer for measuring the distance between the control module and the terminal; a server for transmitting the field information of the golf course to the memory; and the terminal for selectively or in real time interacting with the control module, wherein the cart body has three or more fixing nodes spaced apart from one another on one side thereof and connected to the control module, one of the fixing nodes becoming a standard of a coordinate, and the distance measurer sequentially calculates the distances of the respective fixing nodes from the terminal, substitutes the calculated distances for trilateration algorithm, obtains the coordinate values of x and u of the terminal, determines the coordinate values of the x and u as the position values of the terminal, calculates the distance and angle between the fixing node as the standard and the position values of the terminal, and transmits the calculated result to the control module to allow the cart body to perform autonomous driving. If the terminal transmits ping, the control module receives pong, and if the number of fixing nodes checked after the pong timeout of 100 ms is less than three, the ping is transmitted again, whereas if the number of fixing nodes checked is greater than three, the conversion into a round-robin state is made. In the round-robin state, the coordinate values or distances between the terminal and the respective fixing nodes are calculated sequentially, and in this case, the terminal transmits poll to the control module and receives pollack from the control module. If there is no pollack reception with 10 ms after the poll transmission, time is out to re-start the round-robin state, and the terminal transmits range to the control module and receives range_report. If there is no range_report reception with 10 ms after the range transmission, time is out to re-start the round-robin state.

In the above-mentioned technology, while the terminal of the user is in real time tracked, an erroneous range in the position values of the terminal is minimized through the trilateration algorithm, thereby allowing the cart body to be autonomously driven accurately.

In the above-mentioned technology, in specific, after the golf cart has recognized the remote controller of the user, it receives the accurate position value of the remote controller and moves, while having the predetermined distance from the remote controller, so that the golf cart is driven behind the user, while always having the predetermined distance from the user, unless the user sends a stop signal to the golf cart.

However, if the user moves in a state where no stop command is issued to the golf cart during the round of golf, the golf cart in real time tracks the remote controller carried with the user according to the set distance (predetermined distance), thereby causing big and small safety accidents and many inconveniences during the round of golf.

While the golf cart is recognizing the remote controller carried with the user and being thus driven, having the predetermined distance from the user, if it is desired that the user moves to another place after accessing the golf cart to pick up a golf club, the user always must inconveniently press a button for operating the golf cart.

US 2020/349789 (A1) relates to a mobile robot management service system capable of operating in association with a user terminal module and accessories including a mobile communication device.

KR 101 451 592 (B1) relates to a system for controlling a wireless operation golf cart for a gold field, which includes a remote controller having a GPS module and a Bluetooth module, and a cart.

KR 2017 0089074 (A) relates to a mobile robot system, comprising: a wearable terminal provided for a user to be wearable; and a mobile robot driving depending on a location of a user and a movement direction.

### Disclosure

### Technical Problem

Accordingly, the present invention has been made in view of the above-mentioned problems occurring in the related art, and it is an object of the present invention to provide a routine-based cart system operating by recognizing specific behaviors of a user and a cart control method using the cart system that are capable of allowing a cart to interact with a remote controller carried with the user, recognize the remote controller, and automatically operate, while having a predetermined distance from the user, wherein to do this, the specific behaviors of the user carrying the remote controller are recognized and analyzed with the algorithms corresponding to the specific behaviors that are built in the interior of the cart, and the cart automatically stops, without any use of the remote controller by the user, thereby providing many conveniences during a round of golf.

### Technical Solution

To accomplish the above-mentioned objects, a routine-based cart system operating by recognizing specific behaviors of a user, the cart system being configured to track one or more remote controllers (100) carried with a user in real time, recognize the user, and perform autonomous driving behind the user, while keeping a predetermined distance from the user, the cart system including:
the remote controllers (100) each having a first IMU sensor (110) adapted to recognize the specific behaviors of the user that are stored in a first memory (130) and transmit the recognized information to a controller (240) of a cart (200), a GPS sensor (120) adapted to provide the position information thereof, the first memory (130) having algorithms (131) corresponding to the specific behaviors, and a first communication module (140) performing communication with a second communication module (210) of the cart (200); and
the cart (200) having the second communication module (210) performing communication with the first communication module (140), a distance measurer (230) for measuring the distance from the user, and the controller (240) for automatically controlling driving thereof and if the specific behaviors recognized are received from the first IMU sensor (110), stopping the driving, the second communication module (210), the distance measurer (230), and the controller (240) being attached to one side of the inside or outside of a cart body having driving means adapted to allow the cart (200) to be driven behind the user through the data received from the distance measurer (230). [20] The specific behaviors may be behaviors of the user made by using his or her body or a tool, and the controller (240) operates the cart (200) if the first IMU sensor (110) recognizes the user's specific behavior and transmits the recognized signal to the controller (240) in a state where the cart (200) stops.

The cart (200) may further include a second IMU sensor (250) having the same function as the first IMU sensor (110) and transmitting information of the state of a road surface along which the cart (200) moves to the controller (240) and a second memory (260) having the same function as the first memory (130), so that if the first IMU sensor (110) does not recognize the user's specific behaviors for a given period of time, the second IMU sensor (250) recognizes the user's specific behaviors and transmits the recognized information to the controller (240).

The time required to recognize the user's specific behavior by the first IMU sensor (110) may be 0.1 to 0.3 seconds, and the recognition time of the first IMU sensor (110) and the distance of the cart (200) from the user are selectively set by the controller (240).

The remote controller (100) may include a mode controller (150) having a tracking driving mode (151) in which the cart (200) tracks the user in real time and thus performs the autonomous driving behind the user, while keeping the predetermined distance from the user, a standby mode (153) in which the cart (200) is kept at a standby state behind the user, and a control mode (155) in which the cart (200) is selectively set automatically or manually.

The cart (200) may include an alarm (270) adapted to generate an alarm sound if the distance of the cart (200) from the remote controller (100) or the user is greater than 1 m in a state where the cart (200) is in the standby mode (153) by means of the remote controller (100).

A cart control method using the routine-based cart system operating by recognizing the specific behaviors of the user according to the present invention may include: the storing step (S100) in which the one or more specific behaviors of the user are stored in the first memory (130) of the remote controller (100); the recognizing step (S200) in which the remote controller (100) and the cart (200) are connected wirelessly with each other to allow the cart (200) to operate through the recognition of the remote controller (100); the real time operating step (S300) in which after the cart (200) has recognized the remote controller (100) in the recognizing step (S200), the cart (200) operates in real time, while keeping the predetermined distance from the user behind the user, which is made through the distance measurer (230); the cart stopping step (S400) in which if the first IMU sensor (110) recognizes the user's one specific behavior, the cart (200) automatically stops by the control of the controller (240); and the cart re-starting step (S500) in which if the first IMU sensor (110) recognizes the user's another specific behavior after the cart stopping step (S400), the cart (200) automatically operates by the control of the controller (240).

In the cart stopping step (S400) and the cart re-starting step (S500), if the first IMU sensor (110) fails to recognize the user's specific behaviors within predetermined time, the second IMU sensor (250) may recognize the user's specific behaviors and transmit the recognized signals to the controller (240) so that the cart (200) stops or re-starts.

In this case, in the recognizing step (S200), the cart (200) may be driven through the recognition of the remote controller (100), while being set in any one of a tracking driving mode and a manual driving mode.

### Advantageous Effectiveness

According to the present invention, the routine-based cart system operating by recognizing the specific behaviors of the user and the cart control method using the cart system are provided so that the original purpose of the cart system is achieved, and simultaneously, the cart performs the autonomous driving behind the user, while keeping the predetermined distance from the user. In this case, if the cart recognizes the user's specific behaviors stored in the remote controller or therein, the cart stops or re-starts, and accordingly, the cart autonomously stops or re-starts, without receiving any stop or re-start command signals from the user, thereby providing many conveniences in use. Further, if the cart becomes distant from the remote controller over the predetermined distance in a state where the cart is set in the standby mode, the alarm sound is generated to allow the user to recognize the location of the cart and the standby mode setting, so that the user handles such a situation well. Moreover, the IMU sensor and the memory are included in the remote controller and the cart, so that if the remote controller fails to recognize the user, the cart recognizes the user, thereby preventing the occurrence of malfunctions.

### Brief Description of Drawings

FIG. 1 is a block diagram showing a configuration of a routine-based cart system operating by recognizing specific behaviors of a user according to the present invention.
FIG. 2 is a block diagram showing a cart control method using the routine-based cart system according to the present invention.
FIG. 3 is a flowchart showing the cart control method using the routine-based cart system according to the present invention.
FIG. 4 is an exemplary view showing a use state of the routine-based cart system according to the present invention.

| | |
|---|---|
| 100: Remote controller | 110: First IMU sensor |
| 120: GPS sensor | 130: First memory |
| 140: First communication module | 150: Mode controller |
| 151: Tracking driving mode | 153: Standby mode |
| 155: Control mode | |
| 200: Cart | |
| 210: Second communication module | |
| 230: Distance measurer | 240: Controller |
| 250: Second IMU sensor | 260: Second memory |
| 270: Alarm | |
| S100: Storing step | S200: Recognizing step |
| S300: Real time driving step | S400: Cart stopping step |
| S500: Cart re-starting step | |

### Best Mode for Invention

The present invention relates to a routine-based cart system operating by recognizing specific behaviors of a user and a cart control method using the cart system that are capable of recognizing and analyzing the specific behaviors of the user carrying a remote controller, if the specific behaviors corresponding to the specific behaviors of the user stored in a cart are done, to automatically stop the cart, without any use of the remote controller by the user.

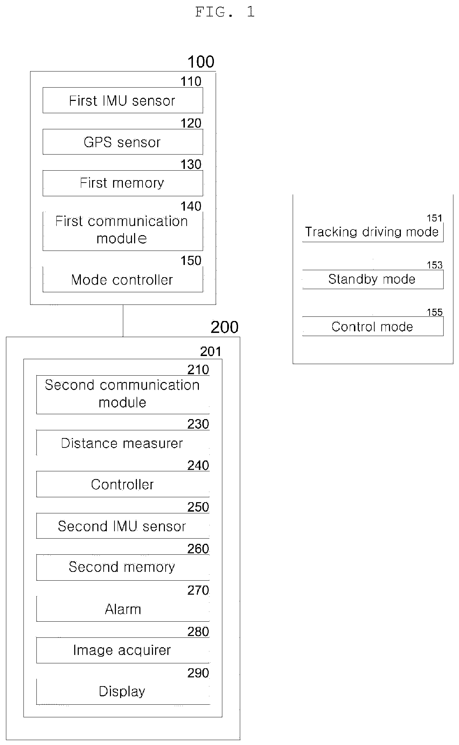

Hereinafter, an explanation of desirable configuration and operation of the present invention will be given in detail with reference to FIGs. 1 to 4.

First, a routine-based cart system operating by recognizing specific behaviors of a user according to the present invention is configured to have one or more remote controllers 100 carried with the user and a cart 200 recognizing the user and thus performing autonomous driving behind the user, while keeping a predetermined distance from the user, so that the cart 200 performs wireless communication with the remote controllers 100 and stops or re-operates if the specific behaviors of the user are recognized, while being in real time autonomously driven behind the user according to the signals received from the remote controllers 100.

The remote controller 100 is carried with the user and includes a first Inertial Measurement Unit (IMU) sensor 110, a GPS sensor 120, a first memory 130, and a first communication module 140, as shown in FIG. 1.

The first IMU sensor 110 recognizes one or more specific behaviors of the user that are stored in the first memory 130 and transmits the recognized information to a controller 240 of the cart 200. As a result, the controller 240 stops or re-starts the cart 20, based on the received information.

The first IMU sensor 110 consists of a single sensor or a plurality of sensors having different characteristics that are organically combined with one another to recognize the user's specific behaviors, and if the first IMU sensor 110 consists of the plurality of sensors, a degree of accuracy in recognizing the user's specific behaviors becomes high.

For example, the plurality of sensors include a sensor for detecting the user's motions, a sensor for detecting the user's body temperature, and a sensor for recognizing the user's voice, and the specific behaviors are recognized through data based on the information detected through the sensors, so that the recognized data is transmitted to the controller 240, thereby minimizing errors to thus allow the cart 200 to operate well, while being prevented from being malfunctioned.

The GPS sensor 120 is configured to provide the moving path and position of the cart 200, and to do this, it performs typical GPS functions. Through the GPS sensor 120, a distance measurer 230 of the cart 200 recognizes an accurate position of the cart 200, so that the cart 200 can perform autonomous driving, while keeping the predetermined distance from the user behind the user.

The first memory 130 is configured to have algorithms 131 corresponding to the specific behaviors, and to do this, it stores one or more specific behaviors stored by the user and provides a standard through which the first IMU sensor 110 recognizes the specific behaviors. As a result, if the first IMU sensor 110 recognizes the specific behaviors, the first memory 130 provides the standard through which it is determined whether the specific behaviors are behaviors for stopping or re-starting the cart 200 through the algorithms 131.

The first communication module 140 is configured to perform communication with a second communication module 210 of the cart 200, and to do this, it transmits signals after the first IMU sensor 110 has recognized the user's specific behaviors to the controller 240 of the cart 200. Typical communication technologies may be applied to the first communication module 140.

Further, the specific behaviors are behaviors of the user made by using his or her body or a tool. For example, if the user looks back in the state where the cart 200 recognizes the back of the user, such a behavior of the user is recognized as the behavior for stopping the cart 200, and if the user bows or raises his or her arms in the state where the cart 200 stops and thus recognizes the back of the user again, such a behavior of the user is recognized as the behavior for re-starting the cart 200, so that the cart 200 performs autonomous driving behind the user.

Further, the remote controller 100 includes a mode controller 150 having a tracking driving mode 151 in which the cart 200 tracks the user in real time and thus performs the autonomous driving behind the user, while keeping the predetermined distance from the user, a standby mode 153 in which the cart 200 is kept at a standby state behind the user, and a control mode 155 in which the cart 200 is selectively set automatically or manually, and accordingly, the mode as required is set according to the purpose of use.

In this case, the standby mode 153 means the standby state in which the cart 200 stops by the specific behavior of the user or by arbitrarily pressing a stop button by the user.

As shown in FIG. 1, the cart 200 includes a cart body, the second communication module 210, the distance measurer 230, and the controller 240.

The cart body is the same as a typical cart and includes driving means. Further, the cart body is configured to allow various loads to be located thereon and to have the second communication module 210, the distance measurer 230, and the controller 240 attached or fixed to the inside or outside thereof.

The driving means includes a pair of wheels spaced apart from each other by a given distance at the front side of the cart body, a pair of wheels spaced apart from each other by a given distance at the rear side of the cart body, and a drive motor connected through connection means to the respective wheels or one wheel to transmit power to the wheels, so that the cart body automatically moves in every direction, and further, the wheels located at the front or rear side of the cart body are converted in direction toward a left or right direction.

The cart body is the cart body typically used, and therefore, no additional explanation and illustration are provided.

Further, the cart body is made of steel or metal, thereby improving the durability thereof.

The second communication module 210 is mounted at one side of the inside or outside of the cart body to perform the communication with the first communication module 140, and the second communication module 210 has the same configuration as the first communication module 140. Therefore, no additional explanation of the second communication module 210 is given.

The distance measurer 230 serves to measure a distance from the user, and through the distance measured through the distance measurer 230, the cart 200 performs the autonomous driving behind the user, while keeping the predetermined distance from the user.

In this case, if a distance from the cart 200, the remote controller 100, or the user is selectively set through the controller 240 by the user, the set distance becomes the predetermined distance, and accordingly, the distance measurer 230 transmits the set information to the controller 240 so that the cart 200 operates according to the values before and after the predetermined distance value.

The controller 240 automatically controls the driving of the cart 200 and stops, if it receives the information of the recognized specific behavior from the first IMU sensor 110, driving the cart 200.

In specific, if the first IMU sensor 110 recognizes the user's specific behavior stored in the first memory 130 and transmits the recognized signal to the controller 240, the controller 240 stops driving the cart 200.

In this case, as shown in FIG. 1, the cart 200 further includes a second IMU sensor 250 having the same function as the first IMU sensor 110 and providing information of the state of a road surface along which the cart 200 moves to the controller 240 and a second memory 260 having the same function as the first memory 130, so that if the first IMU sensor 110 does not recognize the user's specific behavior for a given period of time, the second IMU sensor 250 recognizes the user's specific behavior and transmits the recognized information to the controller 240.

If the first IMU sensor 110 and the first memory 130 of the remote controller 100 fail to recognize the user's specific behavior, the second IMU sensor 250 and the second memory 260 recognize the user's specific behavior and thus help the cart 200 operate without any problem.

In this case, the first priority in recognizing the user's specific behavior is the first IMU sensor 110, and if the first IMU sensor 110 fails to recognize the user's specific behavior, the second priority in recognizing the user's specific behavior is the second IMU sensor 250.

In this case, when the first IMU sensor 110 or the second IMU sensor 250 recognizes the user's specific behavior, it is determined whether the data pre-stored in the first memory 130 or the second memory 260 corresponds to the recognized specific behavior through the algorithm, and next, the first IMU sensor 110 or the second IMU sensor 250 transmits the determined signal to the controller 240. In this case, the first IMU sensor 110 transmits and receives signals to and from the first memory 130 as the first priority and recognizes the user's specific behavior, and if it does not receive any signal from the first memory 130, it transmits and receives signals to and from the second memory 130, recognizes the user's specific behavior, and transmits the signals to the controller 240. Further, the second IMU sensor 250 transmits and receives signals to and from the second memory 260 as the first priority and to and from the first memory 130 as the second priority and transmits the signals to the controller 240, and if necessary, the first IMU sensor 110 and the second IMU sensor 250 transmit signals to both of the first memory 130 and the second memory 260, irrespective of the priority, so that if the signals received back are the same as each other, the signals are transmitted to the controller 240.

According to the present invention, that is, the recognition of the specific behavior of the first and second IMU sensors 110 and 250 may be changed in various methods, and the first and second IMU sensors 110 and 250 receive the signals corresponding to the specific behaviors from both of the first memory 130 and the second memory 260 and transmit the received signals to the controller 240, so that a degree of accuracy in recognizing the user's specific behaviors becomes high.

In specific, if one of the first and second IMU sensors 110 and 250 or one of the first and second memories 130 and 260 is malfunctioned or does not work due to external reasons, only the other can operate, and in this case, further, the degree of accuracy in recognizing the user's specific behaviors becomes high.

In this case, the time required to recognize the user's specific behavior by the first IMU sensor 110 is 0.1 to 0.3 seconds, and if the time for recognition is exceeded, the user's specific behavior is recognized by the second IMU sensor 250.

In this case, the recognition time of the first IMU sensor 110 and the distance of the cart 200 from the user are selectively set by the controller 240, and various changes in the time and distance may be made according to the use purpose of the cart 200, thereby providing many conveniences of use.

Further, the cart 200 includes an alarm 270 adapted to generate an alarm sound if the distance of the cart 200 from the remote controller 100 or the user is greater than 1 m in a state where the cart 200 is in the standby mode 153 by means of the remote controller 100, and if the user moves without having any specific behavior in a state where the cart 200 stops so that the user mistakes the stopped cart 200 for the cart 200 being driven behind him or her or the cart 200 has a long distance from the user, accordingly, the alarm sound is generated from the alarm 270 and thus recognized by the user, thereby providing many conveniences in use.

Further, the cart 200 includes an image acquirer 280 for capturing images and photos of the user and surrounding environments around the user in real time to prevent the occurrence of various unexpected bad situations, and accordingly, the images and photos may be provided as materials utilized in the future. The cart 200 further includes a display 290 adapted to display the images acquired by the image acquirer 280 in real time.

The image acquirer 280 includes a general camera, and the display 290 includes a device through which an image is typically checkable.

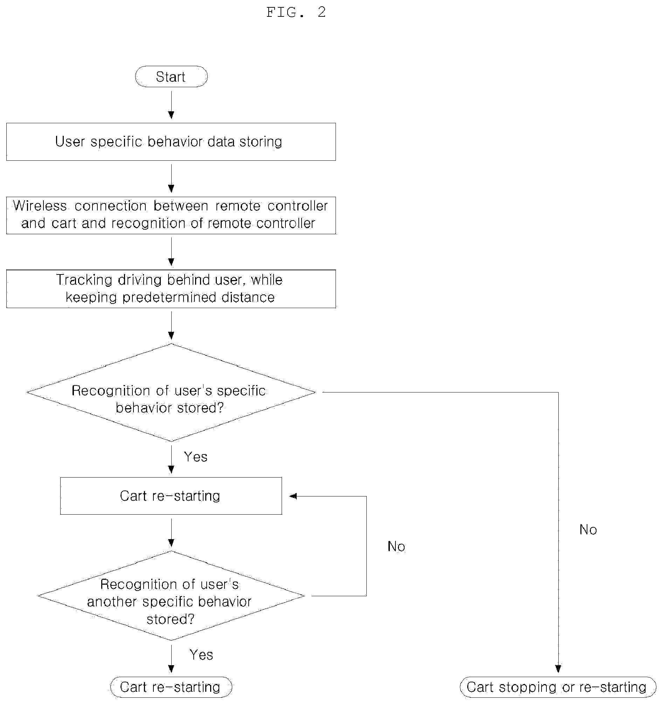

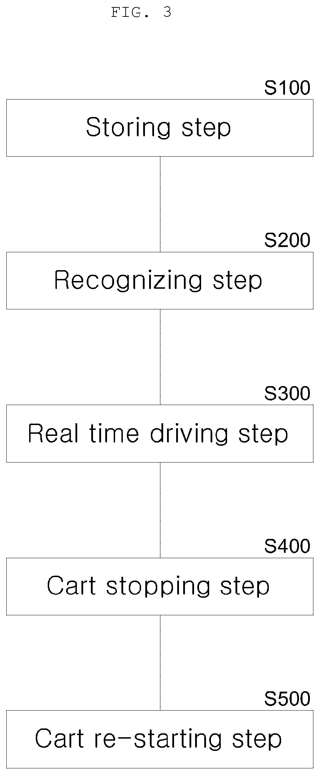

As shown in FIG. 2 or 3, a cart control method using the routine-based cart system includes a storing step (S100), a recognizing step (S200), a real time driving step (S300), a cart stopping step (S400), and a cart re-starting step (S500).

The storing step (S100) is the step in which one or more specific behaviors of the user are stored in the first memory 130 of the remote controller 100 by the user to thus produce data for automatically stopping or re-starting the cart 200 in the cart stopping step (S400) or the cart re-starting step (S500).

In specific, in the storing step (S100), data relating to the user's specific behaviors (gestures or behaviors using a tool) is stored in the first memory 130, and in this case, it is desirable that the specific behaviors be stored in the second memory 260 as well as the first memory 130.

The recognizing step (S200) is the step in which the remote controller 100 and the cart 200 are connected wirelessly with each other to allow the cart 200 to operate through the recognition of the remote controller 100. In this case, the cart 200 receives signals from one or more remote controllers 100 and operates smoothly.

In specific, two or more remote controllers 100 are simultaneously connected wirelessly with the cart 200, but the first remote controller 100 which is connected wirelessly with the cart 200 among the plurality of remote controllers 100 becomes a first priority so that the first remote controller 100 transmits and receives the signals to and from the cart 200. If the power of the remote controller 100 serving as the first priority is off, the remote controller 100, who becomes a second priority, is automatically connected wirelessly with the cart 200, so that no confusion may be made in the use of the cart 200.

In the recognizing step (S200), further, in the case where the cart 200 operates through the recognition of the remote controller 100, the cart 200 is set in any one of the tracking driving mode and the manual driving mode, so that the user selectively sets the mode corresponding to his or her current situation when the cart 200 is used.

The real time operating step (S300) is the step in which after the cart 200 has recognized the remote controller 100 in the recognizing step (S200), the cart 200 operates in real time, while keeping the predetermined distance from the user behind the user, which is made through the distance measurer 230.

The cart stopping step (S400) is the step in which while the cart 200 is being autonomously driven in real time behind the user through the recognition of the user, while keeping the predetermined distance from the user, if the first IMU sensor 110 recognizes the user's specific behavior, the cart 200 automatically stops by the control of the controller 240.

The cart re-starting step (S500) is the step in which if the first IMU sensor 110 recognizes the user's another specific behavior after the cart stopping step (S400), the cart 200 automatically operates by the control of the controller 240.

In this case, in the cart stopping step (S400) and the cart re-starting step (S500), if the first IMU sensor 110 fails to recognize the user's specific behaviors within predetermined time, the second IMU sensor 250 recognizes the user's specific behaviors and transmits the recognized signals to the controller 240 so that the cart 200 stops or re-starts.

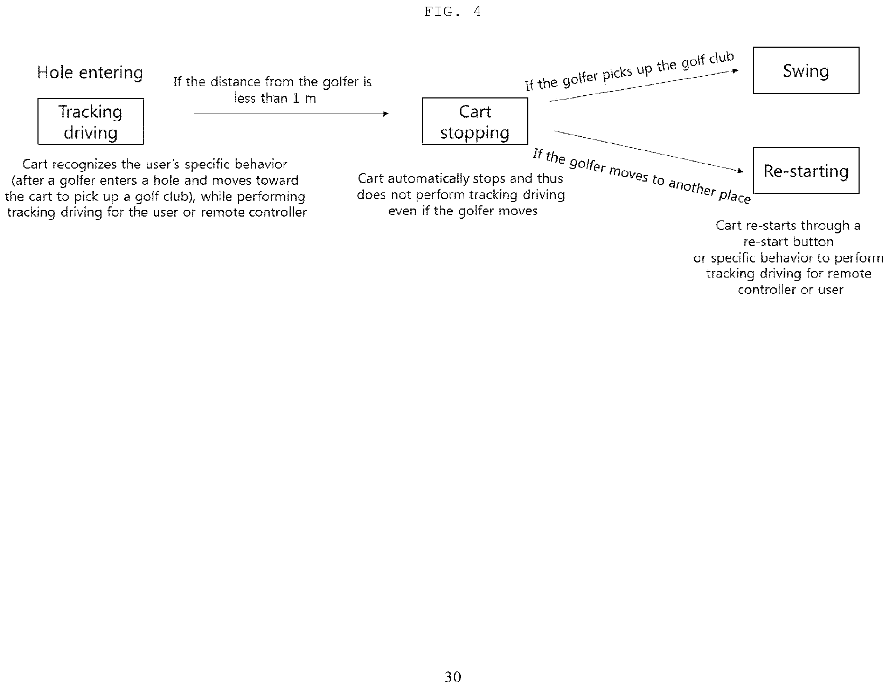

Now, an explanation of a golf cart as the cart system of the present invention will be given. As shown in FIG. 4, the cart 200 recognizes the remote controller 100 in real time and performs tracking driving behind the user, and after the user enters a hole, if he or she moves toward the cart 200 to pick up his or her golf club, the cart 200 automatically stops, so that the cart 200 does not perform any tracking driving for the user or the remote controller 100. If the user presses a re-start button or performs the specific behavior after the user has completed his or her striking or the like, the cart 200 restarts to perform the tracking driving.

Further, the cart system according to the present invention is configured to allow one or more specific behaviors that are most appropriate in the purpose and field where the cart is used to be stored in the first and second memories 130 and 260, thereby providing the conveniences in the use of the cart 200.

According to the present invention, the routine-based cart system operating by recognizing the specific behaviors of the user and the cart control method using the cart system are provided so that the original purpose of the cart system is achieved, and simultaneously, the cart performs the autonomous driving behind the user, while keeping the predetermined distance from the user. In this case, if the cart recognizes the user's specific behavior stored in the remote controller or therein, the cart stops or re-starts, and accordingly, the cart autonomously stops or re-starts, without receiving any stop or re-start command signals from the user, thereby providing many conveniences in use. Further, if the cart becomes distant from the remote controller over the predetermined distance in a state where the cart is set in the standby mode, the alarm sound is generated to allow the user to recognize the location of the cart and the standby mode setting, so that the user handles such a situation well. Moreover, the IMU sensor and the memory are included in the remote controller and the cart, so that if the remote controller fails to recognize the user, the cart recognizes the user, thereby preventing the occurrence of malfunctions.

## Claims

1. A routine-based cart system operating by recognizing specific behaviors of a user, the cart system being configured to track one or more remote controllers (100) carried with a user in real time, recognize the user, and perform autonomous driving behind the user, while keeping a predetermined distance from the user, the cart system comprising:
the remote controllers (100) each having a first IMU sensor (110) adapted to recognize the specific behaviors of the user that are stored in a first memory (130) and transmit the recognized information to a controller (240) of a cart (200), a GPS sensor (120) adapted to provide the position information thereof, the first memory (130) having algorithms (131) corresponding to the specific behaviors, and a first communication module (140) performing communication with a second communication module (210) of the cart (200); and
the cart (200) having the second communication module (210) performing communication with the first communication module (140), a distance measurer (230) for measuring the distance from the user, and the controller (240) for automatically controlling driving thereof and if the specific behaviors recognized are received from the first IMU sensor (110), stopping the driving, the second communication module (210), the distance measurer (230), and the controller (240) being attached to one side of the inside or outside of a cart body having driving means adapted to allow the cart (200) to be driven behind the user through the data received from the distance measurer (230).

2. The routine-based cart system according to claim 1, wherein the specific behaviors are behaviors of the user made by using his or her body or a tool, and the controller (240) operates the cart (200) if the first IMU sensor (110) recognizes the user's specific behavior and transmits the recognized signal to the controller (240) in a state where the cart (200) stops.

3. The routine-based cart system according to claim 1, wherein the cart (200) further comprises a second IMU sensor (250) having the same function as the first IMU sensor (110) and transmitting information of the state of a road surface along which the cart (200) moves to the controller (240) and a second memory (260) having the same function as the first memory (130), so that if the first IMU sensor (110) does not recognize the user's specific behaviors for a given period of time, the second IMU sensor (250) recognizes the user's specific behaviors and transmits the recognized information to the controller (240).

4. The routine-based cart system according to claim 1, wherein the time required to recognize the user's specific behaviors by the first IMU sensor (110) is 0.1 to 0.3 seconds, and the recognition time of the first IMU sensor (110) and the distance of the cart (200) from the user are selectively set by the controller (240).

5. The routine-based cart system according to claim 1, wherein the remote controller (100) comprises a mode controller (150) having a tracking driving mode (151) in which the cart (200) tracks the user in real time and thus performs the autonomous driving behind the user, while keeping the predetermined distance from the user, a standby mode (153) in which the cart (200) is kept at a standby state behind the user, and a control mode (155) in which the cart (200) is selectively set automatically or manually.

6. The routine-based cart system according to claim 5, wherein the cart (200) comprises an alarm (270) adapted to generate an alarm sound if the distance of the cart (200) from the remote controller (100) or the user is greater than 1 m in a state where the cart (200) is in the standby mode (153) by means of the remote controller (100).

7. A cart control method using the routine-based cart system operating by recognizing the specific behaviors of the user according to any one of claims 1 to 6, the cart control method comprising:
the storing step (S100) in which the one or more specific behaviors of the user are stored in the first memory (130) of the remote controller (100);
the recognizing step (S200) in which the remote controller (100) and the cart (200) are connected wirelessly with each other to allow the cart (200) to operate through the recognition of the remote controller (100);
the real time operating step (S300) in which after the cart (200) has recognized the remote controller (100) in the recognizing step (S200), the cart (200) operates in real time, while keeping the predetermined distance from the user behind the user, which is made through the distance measurer (230);
the cart stopping step (S400) in which if the first IMU sensor (110) recognizes the user's one specific behavior, the cart (200) automatically stops by the control of the controller (240); and
the cart re-starting step (S500) in which if the first IMU sensor (110) recognizes the user's another specific behavior after the cart stopping step (S400), the cart (200) automatically operates by the control of the controller (240).

8. The cart control method according to claim 7, wherein in the cart stopping step (S400) and the cart re-starting step (S500), if the first IMU sensor (110) fails to recognize the user's specific behaviors within predetermined time, the second IMU sensor (250) recognizes the user's specific behaviors and transmits the recognized signals to the controller (240) so that the cart (200) stops or re-starts.

9. The cart control method according to claim 7, wherein in the recognizing step (S200), the cart (200) is driven through the recognition of the remote controller (100), while being set in any one of the tracking driving mode and the manual driving mode.

## Patentansprüche

1. Routinebasiertes Wagensystem, das durch Erkennen spezifischer Verhaltensweisen eines Benutzers den Betrieb durchführt, wobei das Wagensystem konfiguriert ist, um eine oder mehrere Fernsteuerungen (100), die mit einem Benutzer mitgeführt werden, in Echtzeit nachzuverfolgen, den Benutzer zu erkennen und autonomes Fahren hinter dem Benutzer durchzuführen, während ein vorbestimmter Abstand zum Benutzer eingehalten wird, wobei das Wagensystem aufweist:
die Fernsteuerungen (100), die jeweils einen ersten IMU-Sensor (110) aufweisen, der angepasst ist, um die spezifischen Verhaltensweisen des Benutzers zu erkennen, die in einem ersten Arbeitsspeicher (130) gespeichert sind, und die erkannten Informationen an eine Steuerung (240) eines Wagens (200) zu übertragen, einen GPS-Sensor (120), der angepasst ist, um die Positionsinformationen davon bereitzustellen, wobei der erste Arbeitsspeicher (130) Algorithmen (131) aufweist, die den spezifischen Verhaltensweisen entsprechen, und ein erstes Kommunikationsmodul (140), das eine Kommunikation mit einem zweiten Kommunikationsmodul (210) des Wagens (200) durchführt; und
den Wagen (200), der das zweite Kommunikationsmodul (210) aufweist, das eine Kommunikation mit dem ersten Kommunikationsmodul (140) durchführt, einen Entfernungsmesser (230) zum Messen der Entfernung vom Benutzer und die Steuerung (240) zum automatischen Steuern des Fahrens davon, und, falls die erkannten spezifischen Verhaltensweisen vom ersten IMU-Sensor (110) empfangen werden, Stoppen des Fahrens, wobei das zweite Kommunikationsmodul (210), der Entfernungsmesser (230) und die Steuerung (240) an einer Seite der Innen- oder Außenseite eines Wagenkörpers befestigt sind, der Antriebsmittel aufweist, die angepasst sind, um dem Wagen (200) zu ermöglichen, durch die vom Entfernungsmesser (230) empfangenen Daten hinter dem Benutzer gefahren zu werden.

2. Routinebasiertes Wagensystem nach Anspruch 1, wobei die spezifischen Verhaltensweisen Verhaltensweisen des Benutzers sind, die durch Verwendung seines oder ihres Körpers oder eines Werkzeugs ausgeführt werden, und die Steuerung (240) den Wagen (200) betreibt, wenn der erste IMU-Sensor (110) das spezifische Verhalten des Benutzers erkennt und das erkannte Signal an die Steuerung (240) in einem Zustand überträgt, in dem der Wagen (200) stoppt.

3. Routinebasiertes Wagensystem nach Anspruch 1, wobei der Wagen (200) ferner einen zweiten IMU-Sensor (250) aufweist, der die gleiche Funktion wie der erste IMU-Sensor (110) aufweist und Informationen über den Zustand einer Fahrbahnoberfläche, entlang welcher sich der Wagen (200) bewegt, an die Steuerung (240) überträgt, und einen zweiten Arbeitsspeicher (260), der die gleiche Funktion wie der erste Arbeitsspeicher (130) aufweist, so dass, wenn der erste IMU-Sensor (110) die spezifischen Verhaltensweisen des Benutzers für einen gegebenen Zeitraum nicht erkennt, der zweite IMU-Sensor (250) die spezifischen Verhaltensweisen des Benutzers erkennt und die erkannten Informationen an die Steuerung (240) überträgt.

4. Routinebasiertes Wagensystem nach Anspruch 1, wobei die Zeit, die erforderlich ist, um die spezifischen Verhaltensweisen des Benutzers durch den ersten IMU-Sensor (110) zu erkennen, 0,1 bis 0,3 Sekunden beträgt, und die Erkennungszeit des ersten IMU-Sensors (110) und der Abstand des Wagens (200) vom Benutzer durch die Steuerung (240) selektiv eingestellt werden.

5. Routinebasiertes Wagensystem nach Anspruch 1, wobei die Fernsteuerung (100) eine Modussteuerung (150) aufweist, die einen Nachverfolgungsfahrmodus (151) aufweist, in dem der Wagen (200) den Benutzer in Echtzeit nachverfolgt und somit das autonome Fahren hinter dem Benutzer durchführt, während er den vorbestimmten Abstand zum Benutzer einhält, einen Bereitschaftsmodus (153), in dem der Wagen (200) in einem Bereitschaftszustand hinter dem Benutzer gehalten wird, und einen Steuerungsmodus (155), in dem der Wagen (200) selektiv automatisch oder manuell eingestellt wird.

6. Routinebasiertes Wagensystem nach Anspruch 5, wobei der Wagen (200) einen Alarm (270) aufweist, der angepasst ist, um einen Alarmton zu erzeugen, wenn der Abstand des Wagens (200) von der Fernsteuerung (100) oder dem Benutzer größer als 1 m ist in einem Zustand, in dem sich der Wagen (200) mittels der Fernsteuerung (100) im Bereitschaftsmodus (153) befindet.

7. Wagensteuerungsverfahren unter Verwendung des routinebasierten Wagensystems, das durch Erkennen der spezifischen Verhaltensweisen des Benutzers nach einem der Ansprüche 1 bis 6 den Betrieb durchführt, wobei das Wagensteuerungsverfahren aufweist:
den Speicherschritt (S100), in dem die eine oder die mehreren spezifischen Verhaltensweisen des Benutzers in dem ersten Arbeitsspeicher (130) der Fernsteuerung (100) gespeichert werden;
den Erkennungsschritt (S200), in dem die Fernsteuerung (100) und der Wagen (200) drahtlos miteinander verbunden werden, um dem Wagen (200) zu ermöglichen, durch die Erkennung der Fernsteuerung (100) den Betrieb durchzuführen;
den Echtzeitbetriebsschritt (S300), in dem, nachdem der Wagen (200) die Fernsteuerung (100) in dem Erkennungsschritt (S200) erkannt hat, der Wagen (200) in Echtzeit den Betrieb durchführt, während er den vorbestimmten Abstand von dem Benutzer hinter dem Benutzer einhält, was durch den Abstandsmesser (230) bewirkt wird;
den Wagenstoppschritt (S400), in dem, wenn der erste IMU-Sensor (110) eine spezifische Verhaltensweise des Benutzers erkennt, der Wagen (200) automatisch durch das Steuern der Steuerung (240) stoppt; und
den Wagenneustartschritt (S500), in dem, wenn der erste IMU-Sensor (110) eine andere spezifische Verhaltensweise des Benutzers nach dem Wagenstoppschritt (S400) erkennt, der Wagen (200) automatisch durch das Steuern der Steuerung (240) den Betrieb durchführt.

8. Wagensteuerungsverfahren nach Anspruch 7, wobei in dem Wagenstoppschritt (S400) und dem Wagenneustartschritt (S500), falls der erste IMU-Sensor (110) die spezifischen Verhaltensweisen des Benutzers innerhalb einer vorbestimmten Zeit nicht erkennt, der zweite IMU-Sensor (250) die spezifischen Verhaltensweisen des Benutzers erkennt und die erkannten Signale an die Steuerung (240) überträgt, so dass der Wagen (200) stoppt oder neu startet.

9. Wagensteuerungsverfahren nach Anspruch 7, wobei in dem Erkennungsschritt (S200) der Wagen (200) durch die Erkennung der Fernsteuerung (100) angetrieben wird, während er in einen beliebigen von dem Nachverfolgungsfahrmodus und dem manuellen Fahrmodus eingestellt ist.

## Revendications

1. Système de voiturette basé sur une routine fonctionnant par reconnaissance de comportements spécifiques d'un utilisateur, le système de voiturette étant configuré pour suivre en temps réel un ou plusieurs dispositifs de commande à distance (100) portés par un utilisateur, reconnaître l'utilisateur et effectuer une conduite autonome derrière l'utilisateur, tout en maintenant une distance prédéterminée par rapport à l'utilisateur, le système de voiturette comprenant :
les dispositifs de commande à distance (100) ayant chacun un premier capteur IMU (110) adapté pour reconnaître les comportements spécifiques de l'utilisateur qui sont stockés dans une première mémoire (130) et transmettre les informations reconnues à un dispositif de commande (240) d'une voiturette (200), un capteur GPS (120) adapté pour fournir les informations de position de celle-ci, la première mémoire (130) ayant des algorithmes (131) correspondant aux comportements spécifiques, et un premier module de communication (140) effectuant une communication avec un second module de communication (210) de la voiturette (200) ; et
la voiturette (200) ayant le second module de communication (210) effectuant une communication avec le premier module de communication (140), un mesureur de distance (230) pour la mesure de la distance par rapport à l'utilisateur, et le dispositif de commande (240) pour la commande automatique de la conduite de celle-ci et si les comportements spécifiques reconnus sont reçus en provenance du premier capteur IMU (110), l'arrêt de la conduite, le second module de communication (210), le mesureur de distance (230) et le dispositif de commande (240) étant attachés à un côté de l'intérieur ou de l'extérieur d'un corps de voiturette ayant des moyens de conduite adaptés pour permettre à la voiturette (200) d'être conduite derrière l'utilisateur par le biais des données reçues en provenance du mesureur de distance (230).

2. Système de voiturette basé sur une routine selon la revendication 1, dans lequel les comportements spécifiques sont des comportements de l'utilisateur réalisés en utilisant son corps ou un outil, et le dispositif de commande (240) fait fonctionner la voiturette (200) si le premier capteur IMU (110) reconnaît le comportement spécifique de l'utilisateur et transmet le signal reconnu au dispositif de commande (240) dans un état où la voiturette (200) s'arrête.

3. Système de voiturette basé sur une routine selon la revendication 1, dans lequel la voiturette (200) comprend en outre un second capteur IMU (250) ayant la même fonction que le premier capteur IMU (110) et transmettant des informations sur l'état d'une surface de route le long de laquelle la voiturette (200) se déplace au dispositif de commande (240) et une seconde mémoire (260) ayant la même fonction que la première mémoire (130), de sorte que si le premier capteur IMU (110) ne reconnaît pas les comportements spécifiques de l'utilisateur pendant une période donnée, le second capteur IMU (250) reconnaît les comportements spécifiques de l'utilisateur et transmet les informations reconnues au dispositif de commande (240).

4. Système de voiturette basé sur une routine selon la revendication 1, dans lequel le temps nécessaire pour reconnaître les comportements spécifiques de l'utilisateur par le premier capteur IMU (110) va de 0,1 à 0,3 seconde, et le temps de reconnaissance du premier capteur IMU (110) et la distance de la voiturette (200) par rapport à l'utilisateur sont réglés sélectivement par le dispositif de commande (240).

5. Système de voiturette basé sur une routine selon la revendication 1, dans lequel le dispositif de commande à distance (100) comprend un dispositif de commande à modes (150) ayant un mode de conduite de suivi (151) dans lequel la voiturette (200) suit l'utilisateur en temps réel et effectue ainsi la conduite autonome derrière l'utilisateur, tout en maintenant la distance prédéterminée par rapport à l'utilisateur, un mode d'attente (153) dans lequel la voiturette (200) est maintenu à un état d'attente derrière l'utilisateur, et un mode de commande (155) dans lequel la voiturette (200) est réglée de manière sélective automatiquement ou manuellement.

6. Système de voiturette basé sur une routine selon la revendication 5, dans lequel la voiturette (200) comprend une alarme (270) adaptée pour générer un son d'alarme si la distance de la voiturette (200) par rapport au dispositif de commande à distance (100) ou à l'utilisateur est supérieure à 1 m dans un état dans lequel la voiturette (200) est dans le mode d'attente (153) au moyen du dispositif de commande à distance (100).

7. Procédé de commande de voiturette utilisant le système de voiturette basé sur une routine fonctionnant par reconnaissance des comportements spécifiques de l'utilisateur selon l'une quelconque des revendications 1 à 6, le procédé de commande de voiturette comprenant :
l'étape de stockage (S100) au cours de laquelle le ou les comportements spécifiques de l'utilisateur sont stockés dans la première mémoire (130) du dispositif de commande à distance (100) ;
l'étape de reconnaissance (S200) au cours de laquelle le dispositif de commande à distance (100) et la voiturette (200) sont connectés sans fil l'un à l'autre pour permettre à la voiturette (200) de fonctionner par le biais de la reconnaissance du dispositif de commande à distance (100) ;
l'étape de fonctionnement en temps réel (S300) au cours de laquelle, après que la voiturette (200) a reconnu le dispositif de commande à distance (100) lors de l'étape de reconnaissance (S200), la voiturette (200) fonctionne en temps réel, tout en maintenant la distance prédéterminée par rapport à l'utilisateur derrière l'utilisateur, distance qui est mesurée par le biais du mesureur de distance (230) ;
l'étape d'arrêt de la voiturette (S400) au cours de laquelle, si le premier capteur IMU (110) reconnaît un comportement spécifique de l'utilisateur, la voiturette (200) s'arrête automatiquement sous la commande du dispositif de commande (240) ; et
l'étape de redémarrage de la voiturette (S500) au cours de laquelle, si le premier capteur IMU (110) reconnaît un autre comportement spécifique de l'utilisateur après l'étape d'arrêt de la voiturette (S400), la voiturette (200) fonctionne automatiquement sous la commande du dispositif de commande (240).

8. Procédé de commande de voiturette selon la revendication 7, dans lequel, lors de l'étape d'arrêt de la voiturette (S400) et de l'étape de redémarrage de la voiturette (S500), si le premier capteur IMU (110) ne parvient pas à reconnaître les comportements spécifiques de l'utilisateur dans un temps prédéterminé, le second capteur IMU (250) reconnaît les comportements spécifiques de l'utilisateur et transmet les signaux reconnus au dispositif de commande (240) afin que la voiturette (200) s'arrête ou redémarre.

9. Procédé de commande de voiturette selon la revendication 7, dans lequel, lors de l'étape de reconnaissance (S200), la voiturette (200) est conduite par la reconnaissance du dispositif de commande à distance (100), tout en étant réglée sur l'un quelconque parmi le mode de conduite de suivi et le mode de conduite manuelle.
